# DEMANDE DE BREVET EUROPEEN

(11) **EP 2 805 613 A1**
(43) Date de publication de la demande: **26.11.2014**
(21) Numéro de dépôt: 14305759.4
(22) Date de dépôt: 22.05.2014
(51) Int. Cl.: A01K 85/00

(54) **Leurre souple multi-usages pour la pêche**

(30) Priorité: 23.05.2013 FR 1354652
(71) Demandeur: SERT, 33290 Blanquefort (FR)
(72) Inventeur: Marlin, Tanguy, 33320 Eysines (FR); Rosmann, Franck, 33160 Saint Médard en Jalles (FR)
(74) Mandataire: Fantin, Laurent

(57) **Abrégé**

Leurre souple (10), multi-usages pour la pêche, comprenant une tête (12), un corps (14) et une queue (16), caractérisé en ce qu'il comprend au moins une découpe (18) formant une amorce (20) de rupture, au droit de la jonction de ladite tête (12) et dudit corps (14). Le leurre peut ainsi être utilisé tel quel ou avec une tête plombée en remplacement de la tête découpée.

## Description

La présente invention concerne un leurre souple pour la pêche.

La pêche aux appâts naturels est complexe car elle nécessite de se procurer lesdits appâts naturels.

Il s'est développé la pêche aux leurres qui sont des imitations de poissons susceptibles de constituer des proies.

Ces leurres sont de différents types et sont utilisés en eau douce comme en eau salée, voire saumâtre.

Il existe au moins deux grandes catégories, les leurres rigides et les leurres souples.

Les leurres ont des applications particulières et des architectures particulières qui ne sont pas abordés ici car n'intéressant pas la présente invention.

Les leurres souples sont généralement des imitations de proies, invertébrés ou petits poissons et ce sont ces leurres qui sont concernés par la présente invention.

Le leurre souple comprend une tête, un corps et une queue.

Le poisson est généralement équipé d'une queue dont le profil varie en fonction de la nage à lui faire effectuer et de l'effet recherché lors de son déplacement..

Le profil de la queue permet en effet de faire varier l'animation, donc les vibrations, donc l'attractivité en fonction du mode de pêche et de l'espèce pêchée.

Quant à la tête, elle est de profil adapté à celui de l'usage recherché et surtout elle est d'une imitation la plus proche du poisson naturel que le leurre cherche à imiter.

Les matériaux dont sont constitués les leurres, ont fait de très importants progrès, permettant d'atteindre quasiment la consistance des poissons naturels qu'ils sont censés imiter.

La couleur et le décor sont également réalisés dans la masse et/ou peints en surface, avec des nuances et des représentations les plus réalistes possibles ou les plus attractives possibles, notamment du point de vue des reflets.

Les leurres souples sont utilisés pour la majorité en association avec un armement. Seuls certains leurres d'attraction, "teasers", permettant de sensibiliser le poisson pour lui faire saisir une proie plus importante ou différente, placée en aval desdits teasers, peuvent ne pas présenter d'armement.

On entend par armement un hameçon, généralement simple. Cet hameçon est introduit par la bouche du poisson, et ressort suivant les techniques par le ventre ou par le dos. Un canal peut même être ménagé dans le corps pour assurer un certain guidage et l'orifice de sortie est déjà préformé pour que ses rebords présentent une meilleure résistance mécanique, notamment au déchirement.

Seuls la pointe et l'ardillon et une petite partie de la partie courbe de la hampe ressortent, la hampe restant, pour sa très grande majorité, dissimulée à l'intérieur du corps du poisson.

L'extrémité libre de la hampe porte des moyens de fixation à un bas de ligne, généralement ces moyens de fixation comprennent un anneau.

Dans ce cas, le leurre proposé est entier tête-corps-queue.

Le poisson est donc monté sur l'armement et la traction s'effectue sur ledit armement, le leurre venant sur ledit armement mais n'étant pas sollicité mécaniquement sauf à la traction que génère ledit armement sur le corps. On constate que le corps vient en butée au fond de la partie courbe de la hampe.

Il existe aussi d'autres armements comme les têtes plombées. Ces armements permettent d'ajouter le poids souhaité au leurre en fonction des conditions de pêche et des techniques de pêche pratiquées, de la force du courant, du vent, de la profondeur de travail par exemple.

Un premier type de tête plombée est constitué d'un hameçon destiné à être monté comme précédemment à la différence que la hampe reste fortement en saillie et porte à son extrémité libre en saillie, une masse métallique, souvent du plomb. Cette masse prend la forme d'une boule pour les plus simples. La masse métallique se trouve alors devant la tête et plus spécifiquement devant la bouche du poisson. Le poisson est là encore entier avec tête-corps-queue.

Un second type de tête plombée est constitué d'une masse métallique en forme de tête de poisson, plus particulièrement en forme de tête de poisson la plus adaptée par rapport à l'espèce concernée pour l'imitation.

La tête plombée comprend toujours un hameçon, solidaire de ladite tête, notamment noyé dans le plomb de coulée lorsque la tête est en plomb. Cet hameçon est monté à travers le corps du poisson comme précédemment.

Dans certains cas, en variante, la hampe de l'hameçon est articulée en arrière de la masse métallique, ce qui permet un degré de liberté entre la masse métallique constituant la tête plombée et la hampe disposée dans le corps du leurre.

La différence dans le cas de cette tête plombée en forme de tête de poisson, c'est que la tête plombée en forme de tête de poisson, articulée ou non, remplace la tête du poisson constituant le leurre.

A cet effet, il existe des leurres souples se présentant sous forme d'un ensemble corps-queue uniquement, sans tête, adaptés pour recevoir les têtes plombées.

Ces corps-queue sont généralement présentés en poche ou blister mais leur présentation est peu attractive pour l'acheteur.

De plus, on comprend que pour un pêcheur qui souhaite utiliser des leurres souples entiers ou uniquement des corps de leurres souples avec des têtes plombées, il lui faut disposer des deux types de leurres souples.

La présente invention vise un leurre souple, adapté pour être utilisé entier ou uniquement comme corps/queue de leurre souple, en armement avec une tête plombée.

L'invention est maintenant décrite en détail, suivant un mode de réalisation particulier, non limitatif, en regard des dessins annexés qui représentent :
- Figure 1 : un leurre selon l'invention, vu en perspective,
- Figure 2 : le leurre de la figure 1, vu en élévation latérale gauche,
- Figure 3 : le leurre de la figure 1, vu de dessous,
- Figure 4 : le leurre de la figure 1, vu de dessus,
- Figure 5 : le leurre de la figure 1, armé en hameçon simple,
- Figure 6 : le leurre des figures 1 à 5, une fois la tête retirée,
- Figure 7 : le leurre de la figure 6, armé d'une tête plombée en forme de tête de poisson.

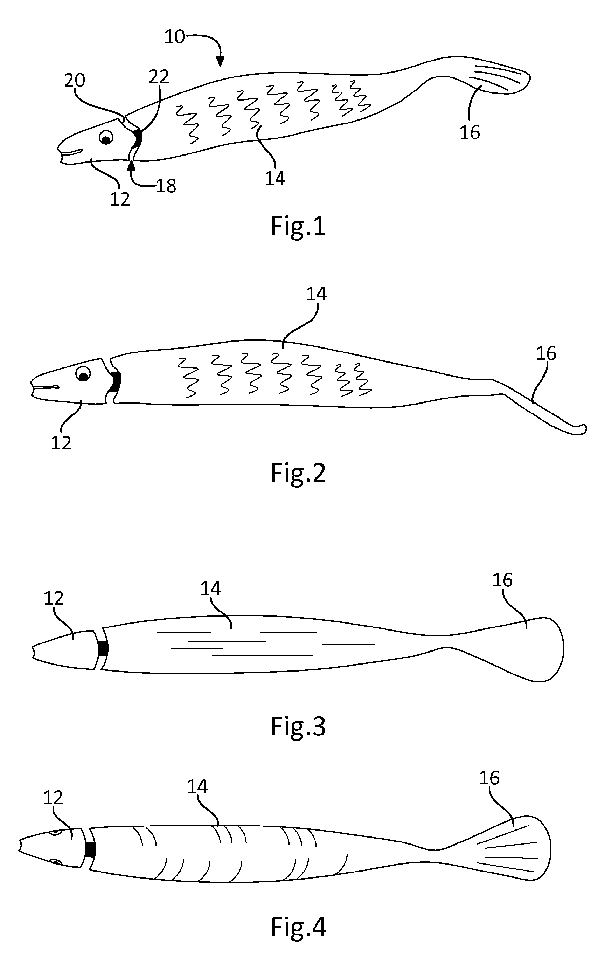

Sur les figures 1 à 5, le leurre 10 comprend une tête 12, un corps 14 et une queue 16.

Le leurre 10 est réalisé en un matériau souple, en élastomère.

Il est en outre ménagé au moins une découpe 18 formant une amorce 20 de rupture.

Cette au moins une découpe 18 est ménagée au droit de la jonction de la tête 12 et du corps 14, sensiblement au niveau de ce qui correspondrait aux ouïes d'un vrai poisson et en l'occurrence les ouïes de sa représentation qui constitue le leurre 10.

Dans le mode de réalisation selon l'invention, la découpe 18 est unique et périphérique.

La découpe 18 se prolonge en profondeur sur une partie du volume du corps, laissant subsister au moins un pont 22 de liaison entre la tête 12 et le corps 14. Le pont 22 de liaison est suffisant pour maintenir une liaison mécanique entre la tête et le corps.

La découpe 18 peut être simplement un anneau périphérique, réalisé dans un même plan.

Néanmoins et de façon préférentielle, la découpe 18 pourra être suivant un profil il particulier qui est sur l'avant pour les parties situées au-dessus et en-dessous du leurre et en retrait sur les faces latérales correspondant aux ouïes comme lorsque l'on procède au retrait de la tête d'un poisson naturel. Ainsi la découpe est anatomique.

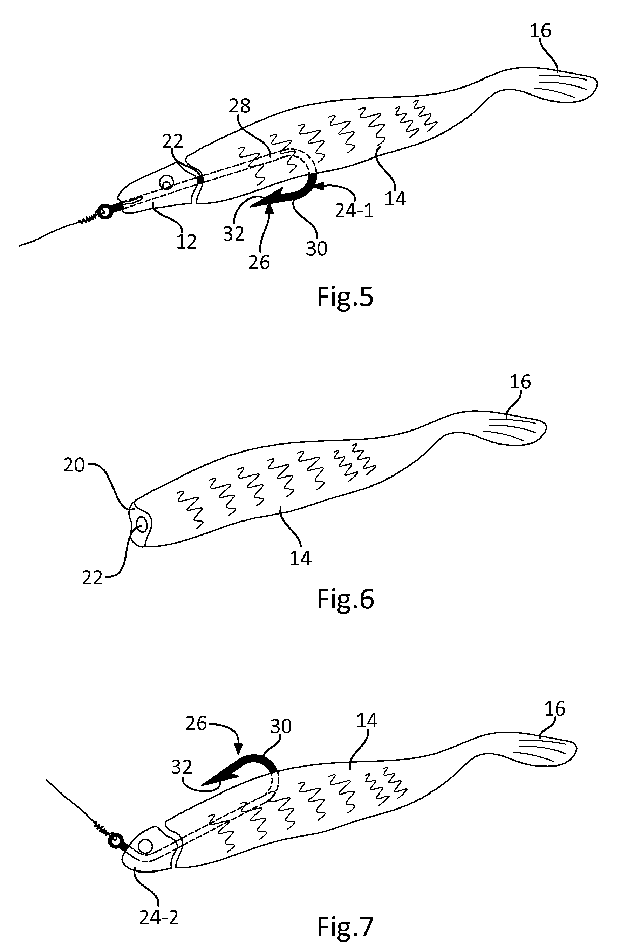

Le leurre 10 selon l'invention, ainsi constitué, est utilisable comme leurre monolithique. Ce leurre peut ainsi recevoir un armement 24-1 sous la forme d'un hameçon 26 dont la hampe 28 se trouve le long de l'axe longitudinal du corps et la pointe 30 et l'ardillon 32 dudit hameçon viennent en saillie au-dessus et/ou en-dessous du corps 14. Cet agencement est représenté sur la figure 5.

Ainsi, un tel leurre peut être monté sur une ligne de pêche à la traîne, seul ou plus généralement sur un bas de ligne en dérivation, en amont d'un leurre terminal, leurre rigide, articulé, cuiller ou naturel.

Si le pêcheur utilisateur constate qu'il lui faut changer de technique de pêche et qu'il vaut mieux pêcher en dérive par exemple à bord d'un bateau, en animant le leurre, ou en lancer/ramener, il lui faut un leurre à tête plombée donc un armement 24-2 à tête plombée.

Dès lors, le poids du leurre et donc son lestage sont essentiels en fonction du courant, de la vitesse de dérive, pour atteindre le fond avec le leurre ou se tenir pour le moins à proximité du fond ou tout simplement de la distance de lancer recherchée.

Dans ce cas, soit le pêcheur utilise des leurres en amont qui sont montés comme pour la traîne, c'est-à-dire en dérivation avec un armement et en amont donc au-dessus du leurre final à tête plombée soit le pêcheur utilise un leurre souple à tête plombée, seul.

Dans tous les cas où cela est nécessaire, pour réaliser son leurre à tête plombée, le pêcheur utilise un leurre de la taille, de la couleur, de la forme et de la consistance souhaitées et en retire la tête en cassant le pont 22. Ceci est aisément réalisé par traction. Le leurre se présente alors comme sur la figure 6.

Dès lors on constate que le corps 14 /queue 16 qui subsiste, dans le meilleur mode de réalisation selon la présente invention, présente une forme anatomique sur la face transversale libérée par le retrait de la tête.

Le pêcheur peut alors monter son armement 24-2 à tête plombée, rigide ou articulé, en faisant pénétrer son hameçon comme indiqué précédemment.

La forme anatomique de la face de contact entre la tête plombée et la forme de la tête plombée qui a un profil conjugué, permettent d'assurer un parfait placage de la tête plombée sur le corps dont la tête a été retirée. Le leurre ainsi équipé est représenté sur la figure 7.

On constate que le pêcheur qui doit déjà disposer des différentes têtes plombées, articulées ou non, de poids différents, des leurres souples complets de différentes longueurs, de différentes formes, de différentes couleurs et éventuellement avec des queues de profils différents n'a donc pas besoin de prévoir en plus des leurres souples complets, des queues de leurres qui elles-mêmes doivent couvrir aussi les différentes longueurs, formes et couleurs, ce qui représente un attirail très important.

La découpe 18 proposée peut être aussi réalisée par tout moyen, notamment en plusieurs découpes non continues, comme un pointillé, ou par deux découpes latérales, le pont étant en fait deux ponts l'un en partie supérieure, l'autre en partie inférieure.

On note aussi que si une tête a été désolidarisée du corps/queue d'un leurre souple selon la présente invention, il est possible néanmoins de monter la tête d'abord et le corps/queue ensuite, sur un armement.

La forme anatomique et le profil conjugué permettent de conserver la tête et le corps/queue dans l'alignement sur l'armement.

Pour les armements à hameçon simple, la hampe d'hameçon peut porter des ardillons supplémentaires et fortement marqués qui assurent la retenue du leurre sur ledit hameçon si bien que même si la tête et le corps ont été séparés, ils peuvent être réutilisés ensembles.

Il est aussi à noter que certaines têtes plombées sont équipées d'un embout invasif qui entoure la hampe portant des ergots de retenue de façon à mieux retenir le leurre en place. Cet embout invasif pénètre dans une partie du corps, si bien que la traction sur le leurre par l'armement est répartie entre la partie courbe de l'hameçon et le corps dudit leurre.

Le leurre souple selon l'invention est multi-usages.

## Revendications

1. Leurre souple (10), multi-usages pour la pêche, comprenant une tête (12), un corps (14) et une queue (16), **caractérisé en ce qu'**il comprend une découpe (18) unique et périphérique formant une amorce (20) de rupture, au droit de la jonction de ladite tête (12) et dudit corps (14), la découpe (18) se prolongeant en profondeur sur une partie du volume du corps (14), laissant subsister au moins un pont (22) de liaison entre la tête (12) et le corps (14).

2. Leurre souple (10), multi-usages pour la pêche, selon la revendication 1, **caractérisé en ce que** la découpe (18) suit un profil sur l'avant pour les parties situées au-dessus et en-dessous du leurre et un profil en retrait sur les faces latérales correspondant aux ouïes, de forme anatomique.

3. Leurre souple (10), multi-usages pour la pêche, selon la revendication 1 ou 2, **caractérisé en ce qu'**il comprend un armement (24-1) sous la forme d'un hameçon (26) avec une hampe (28), une pointe (30) et un ardillon (32), ladite hampe se trouvant le long de l'axe longitudinal du corps (14) et la pointe (30) et son ardillon (32) venant en saillie au-dessus et/ou en-dessous du corps 14.

4. Leurre souple (10), multi-usages pour la pêche, selon la revendication 1 ou 2, **caractérisé en ce que**, une fois la tête retirée par traction, l'ensemble corps (14) / queue (16) reçoit un armement (24-2) à tête plombée.
